(19) Europäisches Patentamt
European Patent Office
Office européen des brevets

(11) **EP 3 198 251 B1**

(12) **EUROPÄISCHE PATENTSCHRIFT**

(45) Veröffentlichungstag und Bekanntmachung des Hinweises auf die Patenterteilung:
**07.11.2018 Patentblatt 2018/45**

(21) Anmeldenummer: **15767145.4**

(22) Anmeldetag: **22.09.2015**

(51) Int Cl.:
*G01M 3/00* *(2006.01)*    *G01M 3/32* *(2006.01)*

(86) Internationale Anmeldenummer:
**PCT/EP2015/071665**

(87) Internationale Veröffentlichungsnummer:
**WO 2016/046170 (31.03.2016 Gazette 2016/13)**

(54) **VORRICHTUNG UND VERFAHREN ZUM KALIBRIEREN EINER FOLIENKAMMER ZUR LECKDETEKTION**

DEVICE AND METHOD FOR CALIBRATING A FILM CHAMBER FOR LEAK DETECTION

DISPOSITIF ET PROCÉDÉ D'ÉTALONNAGE UNE CHAMBRE À MEMBRANE POUR LA DÉTECTION DE FUITE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.09.2014 DE 102014219481**

(43) Veröffentlichungstag der Anmeldung:
**02.08.2017 Patentblatt 2017/31**

(73) Patentinhaber: **Inficon GmbH**
**50968 Köln (DE)**

(72) Erfinder: **DECKER, Silvio**
**50999 Köln (DE)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(56) Entgegenhaltungen:
**EP-A1- 2 447 694    DE-A1-102011 086 486**

**Beschreibung**

Die Erfindung betrifft ein Verfahren und eine Vorrichtung zum Kalibrieren einer Folienkammer zur Leckdetektion.

Bei einer Folienkammer handelt es sich um eine besondere Form einer Prüfkammer zur Aufnahme eines auf Dichtheit zu prüfenden Prüflings. Die Folienkammer zeichnet sich dadurch aus, dass mindestens ein Wandbereich aus einem flexiblen Material (Folie) besteht. Ein auf Dichtheit zu prüfender Prüfling wird in das Innere der Folienkammer gegeben und die Folienkammer anschließend evakuiert. Beim Evakuieren der Folienkammer wird die Luft aus der Folienkammer im Bereich außerhalb des Prüflings gesogen, wodurch sich die flexible Folienkammerwand an den Prüfling anschmiegt. Eine besonders geeignete Folienkammer besteht aus zwei gegeneinander gelegten, den Prüfling umschließenden Folienlagen, die in deren Randbereich gasdicht miteinander verbunden werden. Beim Evakuieren der Folienkammer wird die Folie bis auf verbleibende Totvolumina an den Prüfling herangesogen. Mit Hilfe eines Drucksensors wird anschließend der Druckverlauf innerhalb der Folienkammer im Bereich außerhalb des Prüflings gemessen. Wenn Gas durch ein Leck im Prüfling aus dem Prüfling austritt dient der entsprechend gemessene Druckanstieg als Hinweis auf ein Leck. Die Leckrate kann dabei anhand des Druckanstiegs gemessen werden. Hierzu muss das Folienkammervolumen, das heißt das von der Folienkammer umschlossene Innenvolumen, bekannt sein. Das sich nach dem Evakuieren einstellende Folienkammervolumen hängt von der Größe und Form des Prüflings ab. Durch ein nicht perfektes Anschmiegen der Folie an den Prüfling entstehen Totvolumina.

Die Folienkammer gibt selbst Gas in das Folienkammervolumen ab, zum Beispiel durch aus der Folienkammerwand ausgasende Bestandteile. Daraus resultiert ein Druckanstieg (Offset-Druckanstieg) innerhalb der Folienkammer. Dieser Offset-Druckanstieg und die Totvolumina der Folienkammer beeinflussen die gemessene Leckrate. Daraus resultiert ein Fehler in der Leckratenbestimmung. Herkömmlicherweise erfolgt zur Vermeidung dieses Fehlers eine vorangehende Messung mit einem dichten Prüfling, um den Offset-Druckanstieg und die Totvolumina zu erfassen. Dabei können die Totvolumina allenfalls nur durch eine produktabhängige Kalibrierung vor der eigentlichen Messung erfolgen. Sobald der Prüfling gewechselt wird, zum Beispiel bei einem Stichprobentest oder sobald sich die Anzahl der Prüflinge ändert, ist eine vorangehende produktabhängige Kalibrierung ungenau.

DE 10 2011 086 486 A1 beschreibt eine Vorrichtung und ein Verfahren zur schnellen Lecksuche an einem in einer Folienkammer enthaltenen Prüfling, wobei zu einer genaueren Leckage-Detektion der Verlauf des Totaldruckanstiegs innerhalb der Folienkammer gemessen wird.

EP 2 447 694 A1 beschreibt ein Prüfleck zur Überprüfung eines Leckage-Messsystems.

Der Erfindung liegt die Aufgabe zugrunde, ein verbessertes Verfahren und eine verbesserte Vorrichtung zur Kalibrierung einer Folienkammer bereitzustellen.

Das erfindungsgemäße Verfahren wird definiert durch die Merkmale von Anspruch 1.

Demnach ist der Innenraum der Folienkammer, das heißt das von der Folienkammer umschlossene Folienkammervolumen, gasleitend mit einem von einer Kalibrierkammer umschlossenen Kalibriervolumen verbunden. Zwischen der Folienkammer und der Kalibrierkammer ist ein Kalibrierventil vorgesehen, mit welchem der Gasleitungsweg zwischen der Folienkammer und der Kalibrierkammer beim Evakuieren der Folienkammer verschlossen ist. Nachdem die Folienkammer evakuiert worden ist und während die Druckänderung innerhalb der Folienkammer mit dem Drucksensor gemessen wird, wird das Kalibrierventil geöffnet, wobei beim Öffnen des Kalibrierventils der Druck innerhalb der Kalibrierkammer größer oder kleiner ist als innerhalb der evakuierten Folienkammer.

Nach dem Öffnen des Kalibrierventils strömt Gas aus der Kalibrierkammer in die Folienkammer (oder umgekehrt), was zu einem sprunghaften Druckanstieg oder -abfall innerhalb der Folienkammer führt. Diese Druckänderung kann als abrupter Druckhub bezeichnet werden. Der Druckhub ist dabei proportional zu dem Folienkammervolumen. Im Falle einer leeren Folienkammer, das heißt ohne Prüfling, ist dies das gesamte Innenvolumen der Folienkammer. Wenn ein Prüfling in der Folienkammer enthalten ist, ist dies das verbleibende Volumen innerhalb der Folienkammer im Bereich außerhalb des Prüflings. Anhand des Druckhubs ist es möglich, bei jeder Messung eines Prüflings das jeweils aktuelle Folienkammervolumen zu bestimmen und damit die Leckrate aus dem Druckanstieg exakt zu ermitteln. Eine vorangehende separate Kalibriermessung ist dann nicht erforderlich.

Das Kalibriervolumen sollte so groß sein, dass der Druckhub je nach verwendetem Drucksensor gut messbar ist. Das Kalibriervolumen sollte mindestens 1/1000 betragen und vorzugsweise im Bereich zwischen 1/200 und 1/100 des Folienkammervolumens liegen. Das Kalibriervolumen kann insbesondere im Bereich zwischen 0,5 cm$^3$ und 1 cm$^3$ liegen, wobei das Folienkammervolumen etwa 100 cm$^3$ betragen kann. Innerhalb der Kalibrierkammer sollte vor dem Öffnen des Kalibrierventils ungefähr atmosphärischer Druck (circa 1 bar) herrschen. Daraus resultiert nach Öffnen des Kalibrierventils ein gut messbarer Druckanstieg von circa 10 mbar innerhalb der Folienkammer.

Das Folienkammervolumen wird aus der Differenz des Drucks im Kalibriervolumen vor Öffnen des Kalibrierventils (bekannter, vorzugsweise atmosphärischer Druck) und dem Druck innerhalb der Folienkammer nach dem Öffnen des Kalibrierventils bestimmt. Diese Druckdifferenz wird geteilt durch die Differenz des Drucks innerhalb der Folienkammer nach dem Öffnen des Kalibrierventils und dem Druck innerhalb der Folienkammer vor dem Öffnen des Kalibrierventils. Der Quotient aus diesen beiden Druckdifferenzen wird mit dem Kalibriervolumen multipliziert, um das Folienkammervolumen im Bereich außerhalb des Prüflings zu berechnen.

Vorzugsweise sind das Folienkammervolumen und das Kalibriervolumen derart bemessen, dass der Druck in der Folienkammer nach dem Öffnen des Kalibrierventils sehr viel kleiner ist als der Druck im Kalibriervolumen. Vorzugsweise sollte der Druck in der Folienkammer vor dem Öffnen des Kalibriervolumens um mindestens einen Faktor 10 niedriger als im Kalibriervolumen sein. Das Folienkammervolumen kann dann berechnet werden aus dem Quotienten aus dem Druck im Kalibriervolumen vor dem Öffnen des Kalibriervolumens und dem Druckhub $\Delta p$ innerhalb der Folienkammer beim Öffnen des Kalibrierventils, multipliziert mit dem Kalibriervolumen. Der Druckhub in der Folienkammer beim Öffnen des Kalibrierventils ist die Differenz aus dem Folienkammerdruck nach dem Öffnen des Kalibrierventils und dem Folienkammerdruck vor dem Öffnen des Kalibrierventils.

Nur mit bekannten Innenvolumen der Folienkammer kann aus dem durch ein Leck in einem Prüfling verursachten Druckanstieg innerhalb der Kammer die Leckrate des Prüflings bestimmt werden. Das Folienkammervolumen einer leeren Kammer im evakuierten Zustand wird vorzugsweise durch Kalibrierung mit einem kalibrierten Prüfleck bestimmt.

Zudem ist es möglich, anhand des gemessenen Druckhubs $\Delta p$ zu ermitteln, ob die Folienkammer leer ist oder einen Prüfling enthält. Ein geringerer Druckhub ist dabei ein Hinweis auf einen Prüfling innerhalb der Folienkammer, während ein größerer Druckhub ein Hinweis auf eine leere Folienkammer ohne Prüfling ist, weil die Totvolumina nach dem Evakuieren einer einen Prüfling enthaltenden Folienkammer größer sind als im Fall einer leeren Folienkammer.

Anhand des Druckhubs und/oder anhand des ermittelten Folienkammervolumens (Totvolumen) kann auch auf Form, Größe und/oder Anzahl von Prüflingen in der Folienkammer geschlossenen werden.

Im Folgenden werden anhand der Figuren zwei Ausführungsbeispiele der Erfindung näher erläutert. Es zeigen:

Figur 1    eine schematische Darstellung des ersten Ausführungsbeispiels in einem ersten Betriebszustand,

Figur 2    den Druckverlauf im ersten Betriebszustand,

Figur 3    die Ansicht nach Figur 1 in einem zweiten Betriebszustand,

Figur 4    den Druckverlauf im zweiten Betriebszustand,

Figur 5    die Ansicht nach Figur 1 in einem dritten Betriebszustand,

Figur 6    den Druckverlauf im dritten Betriebszustand,

Figur 7    die Ansicht nach Figur 1 in einem vierten Betriebszustand,

Figur 8    den Druckverlauf im vierten Betriebszustand,

Figur 9    eine schematische Darstellung des zweiten Ausführungsbeispiels in einem Betriebszustand und

Figur 10   den Druckverlauf in dem Betriebszustand nach Figur 9.

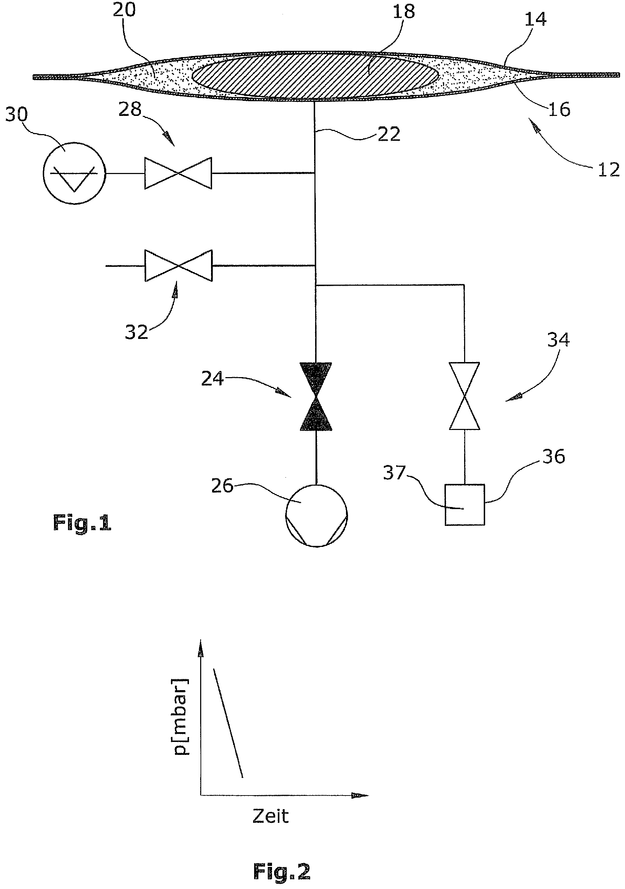

Die folgende Beschreibung bezieht sich auf das erste Ausführungsbeispiel in den Figuren 1 - 8.

Die Folienkammer 12 besteht aus zwei Folienlagen 14, 16, die einen Prüfling 18 umschließen und im Randbereich des Prüflings gasdicht miteinander verbunden sind. Die Folienlagen 14, 16 umschließen ein Folienkammervolumen 20 im Inneren der Folienkammer 12. In Figur 1 ist das Folienkammervolumen 20 das Volumen innerhalb der Folienkammer 12 im Bereich außerhalb des Prüflings 18.

Über eine Gasleitung 22 ist das Innere der Folienkammer 12 gasleitend über ein Evakuierungsventil 24 mit einer Vakuumpumpe 26, über ein Messventil 28 mit einem Drucksensor 30, über ein Belüftungsventil 32 mit der die Folienkammer 12 umgebenden Atmosphäre und über ein Kalibrierventil 34 mit einer Kalibrierkammer 36 verbunden.

Die Kalibrierkammer 36 umschließt ein Kalibriervolumen, das initial mit Luft unter atmosphärischem Druck gefüllt ist. Das Kalibrierventil 34 ist initial geschlossen. In den Figuren ist der geöffnete Zustand eines Ventils durch ein gefüllt dargestelltes Ventil dargestellt und der geschlossene Zustand eines Ventils ist durch ein nicht gefüllt dargestelltes Ventil dargestellt. In dem ersten Betriebszustand gemäß Figur 1 sind folglich das Messventil 28, das Belüftungsventil 32 und das Kalibrierventil 34 geschlossen. Das Evakuierungsventil 24 ist hingegen geöffnet. In dem in Figur 1 dargestellten ersten Betriebszustand befindet sich der Prüfling 18 innerhalb der gasdicht verschlossenen Folienkammer 12 während die Vakuumpumpe 26 die Folienkammer 12 bei geöffnetem Evakuierungsventil 24 über die Gasleitung 22 evakuiert.

Figur 2 zeigt den Druckverlauf, der sich während des Evakuierens innerhalb der Folienkammer 12 einstellt.

Bei geöffnetem Messventil 28 würde der Drucksensor 30 den in Figur 2 dargestellten Druckverlauf messen. In Figur 1 ist beim Evakuieren der Folienkammer 12 das Messventil 28 jedoch geschlossen, um den Drucksensor 30 nicht zu beschädigen.

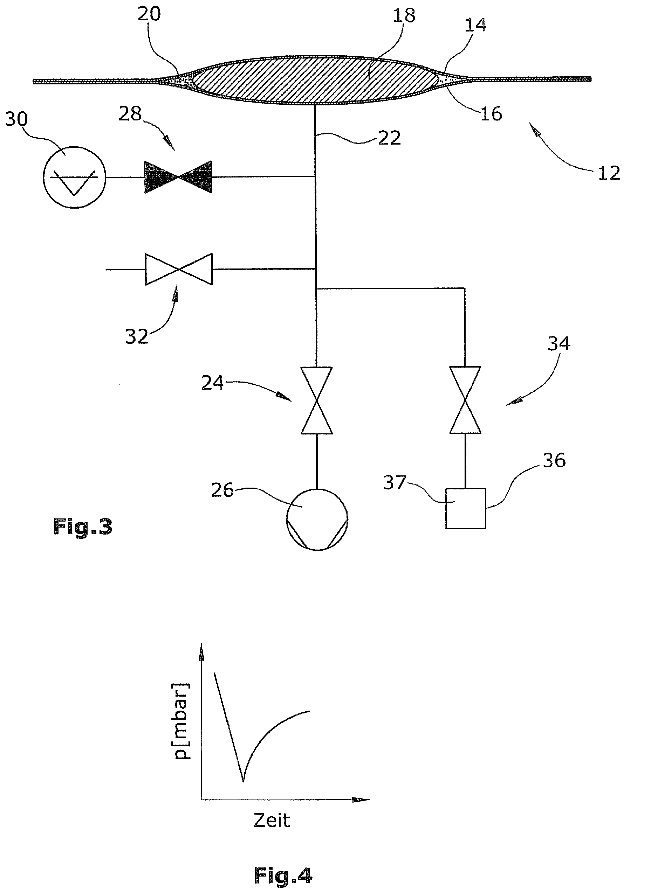

Figur 3 zeigt den nachfolgenden Betriebszustand nach dem Evakuieren der Folienkammer 12. Das Evakuierungsventil 24 ist geschlossen (nicht gefüllt dargestellt) und das Messventil 28 ist geöffnet (gefüllt dargestellt). Das hermetisch verschlossene Folienkammervolumen 20 ist dadurch mit dem Drucksensor 30 verbunden. Wie in Figur 4 dargestellt ist, misst der Drucksensor 30 einen Druckanstieg innerhalb der Folienkammer 12 über der Zeit. Dieser Druckanstieg kann zum einen aus einem Leck in dem Prüfling 18 und zum anderen aus einem Offset-Druck resultieren. Bei dem Offset-Druckanstieg handelt es sich um einen Druckanstieg, der nicht durch ein Leck in dem Prüfling 18 entsteht, sondern durch andere physikalische Effekte, wie zum Beispiel aus der Folienkammerwand ausgasende Gasmoleküle.

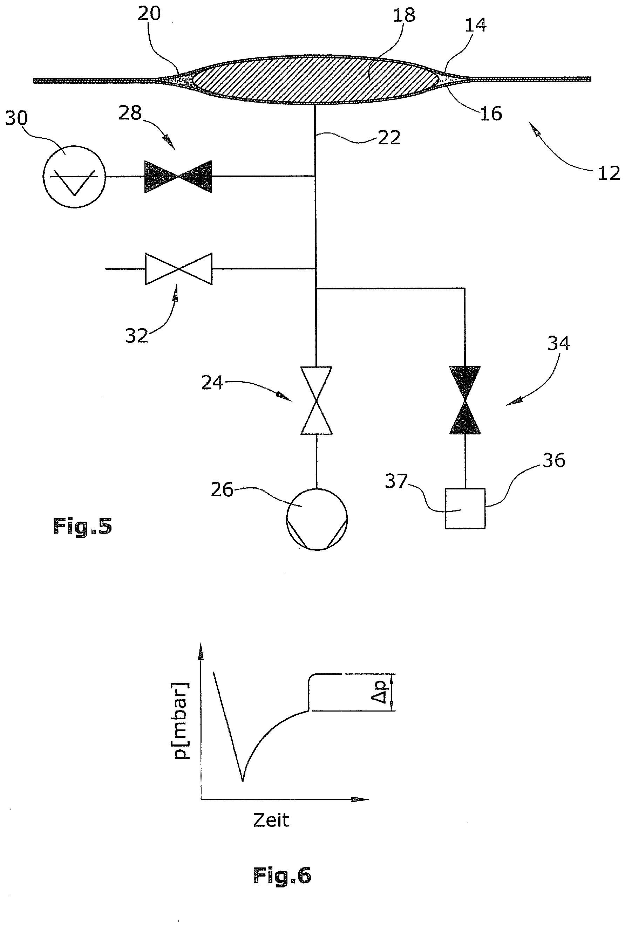

Nach dem Evakuieren der Folienkammer 12 (erster Betriebszustand) und dem Öffnen des Messventils 28 (zweiter Betriebszustand) wird nun auch noch das Kalibrierventil 34 geöffnet. Dieser dritte Betriebszustand ist in Figur 3 dargestellt. Durch das geöffnete Kalibrierventil 34 strömt die Luft aus der Kalibrierkammer 36 über die Gasleitung 22 in die Folienkammer 12. Aufgrund des großen Druckunterschiedes zwischen dem Vakuum innerhalb der Folienkammer 12 und dem atmosphärischen Druck innerhalb der Kalibrierkammer 36 steigt der Druck in der Folienkammer 12 nach dem Öffnen des Kalibrierventils 34 abrupt an. Dieser Druckhub $\Delta p$ ist in Figur 6 dargestellt und wird von dem Drucksensor 30 gemessen. Der Druckhub $\Delta p$ ist die Differenz aus dem Druck $p_G$ innerhalb der Folienkammer 12 nach dem Öffnen des Kalibrierventils 34 und dem Druck $p_F$ innerhalb der Folienkammer 12 vor dem Öffnen des Kalibrierventils 34:

$$\Delta p = (p_G - p_F)$$

Dadurch, dass die Gesamtgasmenge in der Folienkammer 12 und in der Kalibrierkammer 36 vor und nach dem Öffnen des Kalibrierventils erhalten bleibt, gilt

$$p_G (V_F + V_V) = p_F V_F + p_V V_V,$$

wobei

$P_G$:　Druck innerhalb der Folienkammer 12 nach dem Öffnen des Kalibrierventils 34,
$V_F$:　zu bestimmendes Folienkammervolumen 20,
$V_V$:　Kalibriervolumen 37 innerhalb der Kalibrierkammer 36 (im Bereich zwischen 1/1000 und 1/100 des Folienkammervolumens ohne Prüfling) und
$P_V$:　Druck innerhalb der Kalibrierkammer 36 vor dem Öffnen des Kalibrierventils 34 (atmosphärischer Druck, circa 1 bar).

Daraus lässt sich anhand des Druckhubs $\Delta p = p_G - p_F$ das Folienkammervolumen 20 berechnen als:

$$V_F = V_V \frac{(p_v - p_G)}{(p_G - p_F)} = V_V \frac{(p_V - p_G)}{\Delta p}$$

Vorzugsweise ist der Druck in der Folienkammer 12 auch nach dem Öffnen des Kalibrierventils 34 sehr viel kleiner als der Druck innerhalb der Kalibrierkammer 36 vor dem Öffnen des Kalibrierventils 34, so dass $p_G \ll p_V$. Dabei gilt dann näherungsweise für das zu bestimmende Folienkammervolumen 20:

$$V_F \approx V_V \frac{p_V}{p_G - p_F} = V_V \frac{p_V}{\Delta p}.$$

Anhand des Druckhubes $\Delta p$ lässt sich somit das Totvolumen $V_F$ ermitteln, dass sich nach dem Evakuieren der Folienkammer 12 zwischen den Folienlagen 14, 16 und dem Prüfling 18 eingestellt.

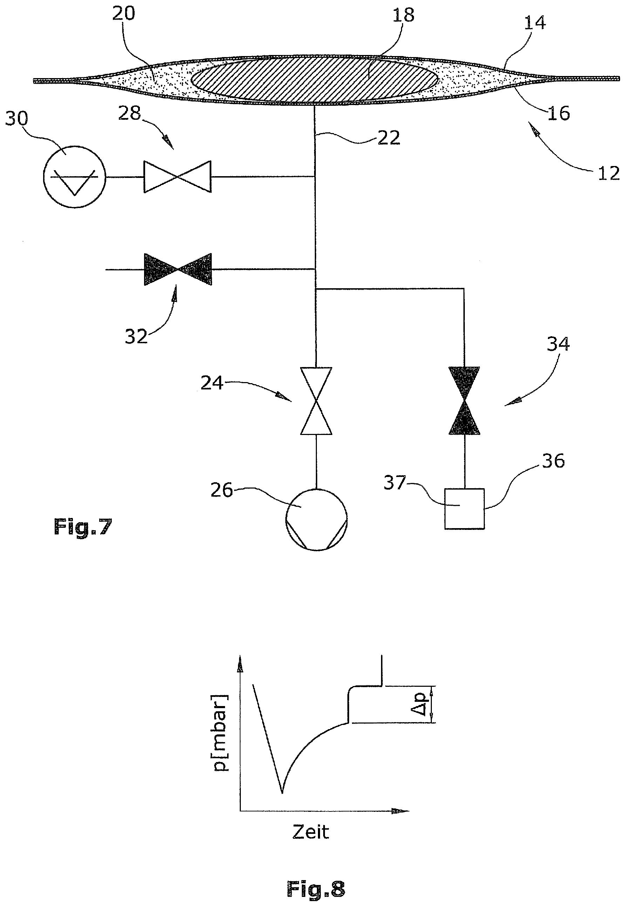

Nach der Messung werden die Folienkammer 12 und die Kalibrierkammer 36 belüftet, in dem zusätzlich zu dem geöffneten Kalibrierventil 34 auch noch das Belüftungsventil 32 geöffnet wird. Dabei stellt sich der in Figur 7 dargestellte Betriebszustand ein.

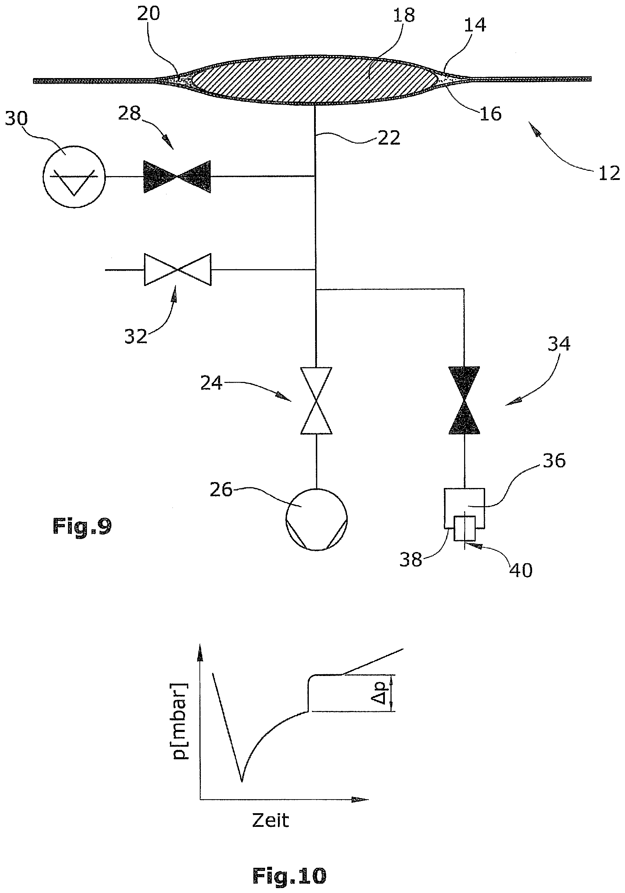

Die folgende Beschreibung bezieht sich auf das in den Figuren 9 und 10 dargestellte zweite Ausführungsbeispiel.

Das zweite Ausführungsbeispiel unterscheidet sich von dem ersten Ausführungsbeispiel lediglich dadurch, dass die Wand 38 der Kalibrierkammer 36 ein Prüfleck 40 mit vordefinierter Leckrate aufweist. Bei dem Prüfleck 40 handelt es sich um ein Kapillarprüfleck. Nach dem Druckhub Δp bewirkt das Prüfleck 40 den in Figur 10 ganz rechts dargestellten weiteren linearen Druckanstieg, mit dessen Hilfe das gesamte System kalibriert werden kann. Bei dem zweiten Ausführungsbeispiel kann also nach der Bestimmung des Folienkammervolumens 20 anhand des Druckhubs Δp der lineare Druckanstieg des Prüflecks 40 genutzt werden, um die Leckrate des Prüflings exakt zu berechnen. Da die Leckrate des Prüflecks 40 bekannt ist, kann anhand der Steigung des durch das Prüfleck 40 verursachten linearen Druckanstiegs die Leckrate des Prüflings aus dem Druckanstieg gemäß Figur 4 oder aus dem Druckhub Δp exakt berechnet werden.

## Patentansprüche

1. Verfahren zum Kalibrieren einer ein Innenvolumen (20) umschließenden Prüfkammer, die als Folienkammer (12) mit mindestens einem flexiblen Wandbereich (14, 16) ausgebildet ist und gasleitend mit einem Drucksensor (30), einer Vakuumpumpe (26) und über ein Kalibrierventil (34) mit einer ein Kalibriervolumen (37) umschließenden Kalibrierkammer (36) verbunden ist, mit den Schritten Evakuieren der Folienkammer (12),
Messen des Druckverlaufs innerhalb der Folienkammer (12), nachdem das Evakuieren abgeschlossen ist,
**gekennzeichnet durch**
gasleitendes Verbinden des Kalibriervolumens (37) mit dem Innenvolumen (20) der Folienkammer (12) während der Messung des Druckverlaufs, wobei der Druck vor Herstellung der gasleitenden Verbindung und bei gasleitender Verbindung mit der Folienkammer (12) gemessen wird, und wobei der Druck in der Kalibrierkammer (36) vor dem Verbinden mit der Folienkammer (12) größer oder kleiner ist als der Druck in der Folienkammer (12), und
Berechnen des Folienkammervolumens (20) als

$$V_F = V_V \frac{(p_v - p_G)}{(p_G - p_F)} \text{ oder } V_F \approx V_V \frac{p_V}{p_G - p_F}$$

wobei

$V_F$: Folienkammervolumen (20),
$V_V$: Kalibriervolumen (37),
$p_V$: Druck in der Kalibrierkammer (36) vor dem Verbinden mit dem Folienkammervolumen (20),
$p_G$: Druck in der Prüfkammer nach dem Verbinden mit dem Kalibriervolumen (37) und
$p_F$: Druck in der Folienkammer (12) vor dem Verbinden mit dem Kalibriervolumen (37).

2. Verfahren nach Anspruch 1, **dadurch gekennzeichnet, dass** das Kalibriervolumen (37) im Bereich zwischen 1/1000 und 1/100 des Folienkammervolumens beträgt und vor dem Verbinden mit der Folienkammer (12) ungefähr atmosphärischer Druck innerhalb der Kalibrierkammer (36) herrscht.

3. Verfahren nach einem der vorhergehenden Ansprüche, **dadurch gekennzeichnet, dass** das Folienkammervolumen (20) mit in der Folienkammer (12) enthaltenem Prüfling (18) bestimmt wird.

4. Verfahren nach einem der vorhergehenden Ansprüche, **dadurch gekennzeichnet, dass** anhand des nach Verbinden mit dem Kalibriervolumen (37) gemessenen Druckanstiegs ermittelt wird, ob ein Prüfling (18) in der Folienkammer (12) enthalten ist, wobei der Druckanstieg mit Prüfling (18) in der Folienkammer (12) geringer ist als ohne Prüfling (18).

5. Verfahren nach dem vorhergehenden Anspruch, **dadurch gekennzeichnet, dass** zudem anhand des ermittelten Folienkammervolumens (20) die Art, Form und/oder Größe des Prüflings (18) bestimmt werden.

6. Verfahren nach einem der vorhergehenden Ansprüche, **dadurch gekennzeichnet, dass** die Kalibrierkammer (36) mit einem Prüfleck (40) mit vordefinierter Leckrate versehen ist, wobei nach dem Bestimmen des Folienkammervolumens (20) anhand des von dem Prüfleck (40) verursachten Druckanstieges in der Folienkammer (12) eine Kalibrierung des Messsensors (30) erfolgt.

**Claims**

1. Method for calibrating a test chamber which encloses an inner volume (20), said test chamber being designed as a film chamber (12) comprising at least one flexible wall portion (14, 16) and being connected in a gas-conducting manner to a pressure sensor (30), to a vacuum pump (26), and via a calibration valve (34) to a calibration chamber (36) enclosing a calibration volume (37), the method comprising the following steps:

   evacuating the film chamber (12);
   measuring the pressure characteristic over time inside of the film chamber (12) after the evacuation has been completed;
   **characterized by**
   connecting the calibration volume (37) in a gas-conducting manner to the inner volume (20) of the film chamber (12) while measuring the pressure characteristic, wherein the pressure is measured before the gas-conducting connection to the film chamber is made and during the gas-conducting connection to the film chamber (12), and wherein the pressure in the calibration chamber (36) before connection to the film chamber (12) is higher or lower than the pressure in the film chamber (12), and
   calculating the film chamber volume (20) as

$$V_F = V_V \frac{(p_v - p_G)}{(p_G - p_F)} \quad or \quad V_F \approx V_V \frac{p_V}{p_G - p_F}$$

   where

   $V_F$: film chamber volume (20),
   $V_V$: calibration volume (37),
   $P_V$: pressure in the calibration chamber (36) before connection with the film chamber volume (20),
   $P_G$: pressure in the test chamber after connection with the calibration volume (37), and
   $P_F$: pressure in the film chamber (12) before connection with the calibration volume (37).

2. Method of claim 1, **characterized in that** the size of the calibration volume (37) is in a range between 1/1000 and 1/100 of the film chamber volume and that approximately atmospheric pressure prevails in the calibration chamber (36) before connection with the film chamber (12).

3. Method of one of the preceding claims, **characterized in that** the film chamber volume (20) is determined with the test object (18) contained in the film chamber (12).

4. Method of one of the preceding claims, **characterized in that**, based on the pressure increase measured after connection with the calibration volume (37), it is determined whether a test object (18) is contained in the film chamber (12), the pressure increase being greater with the test object (18) contained in the film chamber (12) than without the test object (18).

5. Method of the preceding claim, **characterized in that**, in addition, the type, shape and/or size of the test object (18) are determined on the basis of the film chamber volume (20).

6. Method of one of the preceding claims, **characterized in that** the calibration chamber (36) is provided with a test leak (40) having a predefined leakage rate, a calibration of the measuring sensor (30) being performed after the determination of the film chamber volume (20) on the basis of the pressure increase in the film chamber (12) caused by the test leak (40).

**Revendications**

1. Procédé de calibration d'une chambre d'essai délimitant un volume intérieur (20), celle-ci étant conçue comme une chambre en feuille (12) dotée d'au moins une zone de paroi flexible (14, 16) et possédant un raccord poreux au gaz avec un capteur de pression (30), une pompe à vide (26), et raccordée par le biais d'une valve de calibration (34) à une chambre de calibration (36) délimitant un volume de calibration (37), doté des étapes

évacuation de la chambre en feuille (12),

mesure de l'évolution de la pression à l'intérieur de la chambre en feuille (12), après complétion de l'évacuation, **caractérisée par** un raccordement poreux au gaz volume de calibration (37) avec le volume intérieur (20) de la chambre en feuille (12) pendant la mesure de l'évolution de la pression, dans laquelle la pression est mesurée avant d'établir le raccordement poreux et lorsque le raccordement poreux avec la chambre en feuille (12) est établi, et dans laquelle la pression dans la chambre de calibration (36) avant raccordement avec la chambre en feuille (12) est supérieure ou inférieure à la pression dans la chambre en feuille (12), et

calcul du volume de la chambre en feuille (20) par

$$V_F = V_V \frac{(p_v - p_G)}{(p_G - p_F)} \quad \text{ou} \quad V_F \approx V_V \frac{p_V}{p_G - p_F}$$

dans lequel

$V_F$ : volume de la chambre en feuille (20),
$V_V$ : volume de calibration (37),
$p_V$ : pression dans la chambre de calibration (36) avant raccordement avec le volume de la chambre en feuille (20),
$p_G$ : pression dans la chambre d'essai après raccordement avec le volume de calibration (37) et
$p_F$ : pression dans la chambre de calibration (12) avant raccordement avec le volume de calibration (37).

2. Procédé selon la revendication 1, **caractérisé en ce que** le volume de calibration (37) est situé dans un intervalle compris entre 1/1000 et 1/100 du volume de la chambre en feuille et que préalablement au raccordement avec la chambre en feuille (12) l'intérieur de la chambre de calibration (36) est environ à la pression atmosphérique

3. Procédé selon l'une des revendications ci-dessus, **caractérisé en ce que** le volume de la chambre en feuille (20) est déterminé avec l'échantillon (18) contenu dans la chambre de feuille (12).

4. Procédé selon l'une des revendications ci-dessus, **caractérisé en ce qu'**il est déterminé, par l'intermédiaire de l'augmentation de pression mesurée après raccordement avec le volume de calibration (37), si un échantillon (18) est contenant dans la chambre en feuille (12), dans lequel l'augmentation de pression avec échantillon (18) dans la chambre en feuille (12) est inférieure à l'augmentation sans échantillon (18).

5. Procédé selon la revendication ci-dessus, **caractérisé en ce qu'**en outre le type, la forme et/ou la taille de l'échantillon (18) sont déterminés par l'intermédiaire du volume de la chambre en feuille (20).

6. Procédé selon l'une des revendications ci-dessus, **caractérisé en ce que** la chambre de calibration (36) est prévue dotée d'une fuite-étalon (40) avec un taux de fuite prédéfini, dans lequel après détermination du volume de la chambre en feuille (20) une calibration du capteur de mesure (30) est effectuée par l'intermédiaire de l'augmentation de pression dans la chambre en feuille (12) causée par la fuite-étalon (40).

**Fig.1**

**Fig.2**

**Fig.3**

**Fig.4**

**Fig.5**

**Fig.6**

**Fig.7**

**Fig.8**

**Fig.9**

**Fig.10**

**EP 3 198 251 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011086486 A1
- EP 2447694 A1